# EUROPEAN PATENT SPECIFICATION

(11) **EP 3 329 428 B1**
(45) Date of publication and mention of the grant of the patent: **01.12.2021**
(21) Application number: 16833707.9
(22) Date of filing: 01.08.2016
(51) Int. Cl.: G06K 19/077

(54) **DETACHABLE RADIO FREQUENCY IDENTIFICATION SWITCH TAG**
ENTFERNBARES FUNKFREQUENZIDENTIFIZIERUNGSSCHALTERETIKETT
ÉTIQUETTE DE COMMUTATEUR D'IDENTIFICATION PAR RADIOFRÉQUENCE DÉTACHABLE

(30) Priority: 01.08.2015 US 201562199991 P; 20.05.2016 US 201615160982
(43) Date of publication of application: 06.06.2018
(73) Proprietor: Smartrac Technology Fletcher, Inc., Fletcher, NC 28732 (US)
(72) Inventor: NYALAMADUGU, Sheshi, Poway, California 92064 (US); MULLIS, Joe, Poway, California 92064 (US); LEANIO, Bobby, Poway, California 92064 (US)
(74) Representative: Barker Brettell LLP
(86) International application number: PCT/US2016/045069
(87) International publication number: WO 2017/023885

(56) References cited:
- CN-A- 102 332 634
- US-A1- 2007 069 858
- US-A1- 2008 238 679
- US-A1- 2013 105 584
- US-A1- 2015 077 297

## Description

### BACKGROUND

### 1. Technical Field

The various embodiments described herein generally relate to radio frequency identification (RFID) systems and more particularly to an RFID switch tag.

### 2. Related Art

RFID technology harnesses electromagnetic fields to transfer data wirelessly. One of the primary uses for RFID technology is the automatic identification and tracking of objects via RFID tags, which may be attached or incorporated into a variety of objects. Examples include credit cards, passports, license plates, identity cards, cellphones/mobile devices, etc. RFID technology also has applications in numerous areas, including, but not limited to, electronic tolling, parking access, border control, payment processing, asset management, and transportation. Thus, for example, a license plate that includes an RFID tag may be used for the purposes of electronic toll collection (ETC), electronic vehicle registration (EVR), border crossing etc.

Different RFID applications may require different operation frequencies. For example, ultra high frequency (UHF) readers and transponder tags (e.g., operating at 915 megahertz (MHz) or 2.45 gigahertz (GHz)) provide greater read distances and faster data transfer rates, and are thus commonly deployed in ETC systems. In contrast, contactless payment systems may be implemented using high frequency (HF) or near field communication (NFC) readers and transponders (e.g., operating at 13.56 MHz), which tend to exhibit greater field penetration than UHF systems. However, the construction of a conventional RFID tag has limited flexibility to support operation in multiple frequencies.

US 2015 077 297 (A1) discloses a dual band antenna device and method of formation. The method disclosed therein comprises providing a planar conductive sheet; forming a slot antenna in the conductive sheet; the slot antenna configured to communicate at a first frequency; forming a multi-turn antenna in the conductive sheet; the multi-turn antenna configured to communicate in a second frequency that is different from the first frequency; and connecting at least one integrated circuit to said first antenna and said second antenna; enclosing said first antenna, said second antenna, and said at least one integrated circuit in a wearable enclosure.

US 2008 238 679 (A1) discloses a multi-mode RFID tag that includes a power generating and signal detection module, a baseband processing module, a transmit section, a configurable coupling circuit, and an antenna section. In a near field mode, the configurable coupling circuit is operable to couple the transmit section to a coil or inductor in the configurable coupling circuit to transmit an outbound transmit signal using electromagnetic or inductive coupling to an RFID reader. In a far field mode, the configurable coupling circuit is operable to couple the transmit section to the antenna section, and the multi-mode RFID tag then utilizes a back-scattering RF technology to transmit the outbound transmit signal to RFID readers.

### SUMMARY

According to the present disclosure, there is provided a radio frequency identification (RFID) switch tag according to claim 1, and a method of using a RFID switch tag according to claim 10. Optional features of the RFID switch tag and the method are set out in the dependent claims.

Embodiments described herein provide various designs of a radio frequency identification (RFID) tag which includes a base component and a detachable component so that the RFID tag can be configured in multiple configurations to support operations in multiple frequencies.

According to an aspect, a radio frequency identification (RFID) switch tag is disclosed. This RFID switch tag includes a base component having an ultra-high frequency (UHF) booster, such as an UHF booster antenna, and a detachable component having at least one UHF RFID module and a high frequency (HF) RFID module, such as a near-field communication (NFC) tag.

According to another aspect the detachable component is positioned in close proximity to the base component in a first configuration of the RFID switch tag such that the at least one UHF RFID module is sufficiently coupled to the UHF booster in the base component to form an UHF RFID system having a desired performance, such as a desired operating range of the UHF RFID system. In some embodiments, the detachable component is separated from the base component to obtain a second configuration of the RFID switch tag, and the HF RFID module remains functional within the detached detachable component so that the detachable component can be used as a standalone HF RFID tag. Moreover, in the second configuration, the at least one UHF RFID module is decoupled from the UHF booster in the base component to render the at least one UHF RFID module nonfunctional.

According to still another aspect, the UHF RFID module further includes an UHF coupling antenna, and can be coupled to the base component through a coupling between the UHF coupling antenna and the UHF booster.

According to still another aspect, the detachable component can be positioned substantially in the middle of the base component in the first configuration.

According to still another aspect, the RFID switch tag can be placed on a vehicle's windshield to serve as an RFID tag in an electronic toll collection (ETC) application.

According to still another aspect, a technique for using an RFID switch tag that includes a base component and a detachable component is disclosed, wherein the base component further includes an ultra-high frequency (UHF) booster and the detachable component further includes at least one UHF RFID module and a high frequency (HF) RFID module. The detachable component can be positioned in close proximity to the base component in a first configuration of the RFID switch tag such that the at least one UHF RFID module in the detachable component is sufficiently coupled to the UHF booster in the base component to form an UHF RFID tag having a desired operating range longer than an operating range of the at least one UHF RFID module. The UHF RFID tag can be used in a first RFID application which requires the desired operating range.

According to still another aspect, the detachable component can be detached from the base component to obtain a second configuration of the RFID switch tag such that the HF RFID module remains functional within the detached detachable component. The HF RFID module can be used as a near-field communication (NFC) tag in a second RFID application which requires an NFC operating range.

According to still another aspect, the RFID switch tag can be placed on a vehicle's windshield to serve as an RFID tag in an electronic toll collection (ETC) application.

According to still another aspect, the first RFID application is a first ETC application for high occupancy vehicle (HOV) lanes and the second RFID application is a second ETC application for single occupancy vehicle (SOV) lanes.

Other features and advantages of the present inventive concept should be apparent from the following description which illustrates by way of example aspects of the present inventive concept.

### BRIEF DESCRIPTION OF THE DRAWINGS

The embodiments described herein will be understood from a review of the following detailed description and the accompanying drawings in which like reference numerals refer to like parts and in which:
FIG. 1 shows a diagram illustrating an exemplary RFID system in accordance with one embodiment described herein.
FIG. 2 shows a top-view illustration of an exemplary RFID switch tag in an attached configuration in accordance with one embodiment described herein.
FIG. 3 shows a top-view illustration of an exemplary detachable component in the form of a dual-frequency RFID module in accordance with some embodiments described herein.
FIG. 4 shows a top-view illustration of RFID switch tag in a detached configuration in accordance with one embodiment described herein.

### DETAILED DESCRIPTION

While certain embodiments are described, these embodiments are presented by way of example only, and are not intended to limit the scope of protection. The methods and systems described herein may be embodied in a variety of other forms. Furthermore, various omissions, substitutions, and changes in the form of the example methods and systems described herein may be made.

Embodiments described herein provide various designs of a radio frequency identification (RFID) tag which includes at least one base component and a detachable component such that the RFID tag can be configured in multiple configurations to support operations in multiple frequencies. In one aspect, a radio frequency identification (RFID) switch tag is disclosed. This RFID switch tag includes a base component having an ultra-high frequency (UHF) booster, such as an UHF booster antenna, and a detachable component having at least one UHF RFID module and a high frequency (HF) RFID module, such as a near-field communication (NFC) tag. In some embodiments, the detachable component is positioned in close proximity to the base component in a first configuration of the RFID switch tag such that the at least one UHF RFID module is sufficiently coupled to the UHF booster in the base component to form an UHF RFID system having a desired performance, such as a desired operating range of the UHF RFID system. In some embodiments, the detachable component is separated from the base component to obtain a second configuration of the RFID switch tag in which the HF RFID module remains functional within the detached detachable component so that the detachable component can be used as a standalone HF RFID tag. Moreover, in the second configuration, the at least one UHF RFID module is decoupled from the UHF booster in the base component to render the at least one UHF RFID module nonfunctional.

According to other embodiments, a technique for using an RFID switch tag that includes a base component and a detachable component is disclosed, wherein the base component further includes an ultra-high frequency (UHF) booster and the detachable component further includes at least one UHF RFID module and a high frequency (HF) RFID module. This technique can include positioning the detachable component in close proximity to the base component in a first configuration of the RFID switch tag such that the at least one UHF RFID module in the detachable component is sufficiently coupled to the UHF booster in the base component to form an UHF RFID tag having a desired operating range longer than an operating range of the at least one UHF RFID module. The technique further includes using the UHF RFID tag in a first RFID application, which requires the desired operating range. In some embodiments, the technique also includes detaching the detachable component from the base component to obtain a second configuration of the RFID switch tag such that the HF RFID module remains functional within the detached detachable component. The technique additionally includes using the HF RFID module as a near-field communication (NFC) tag in a second RFID application which requires an NFC operating range.

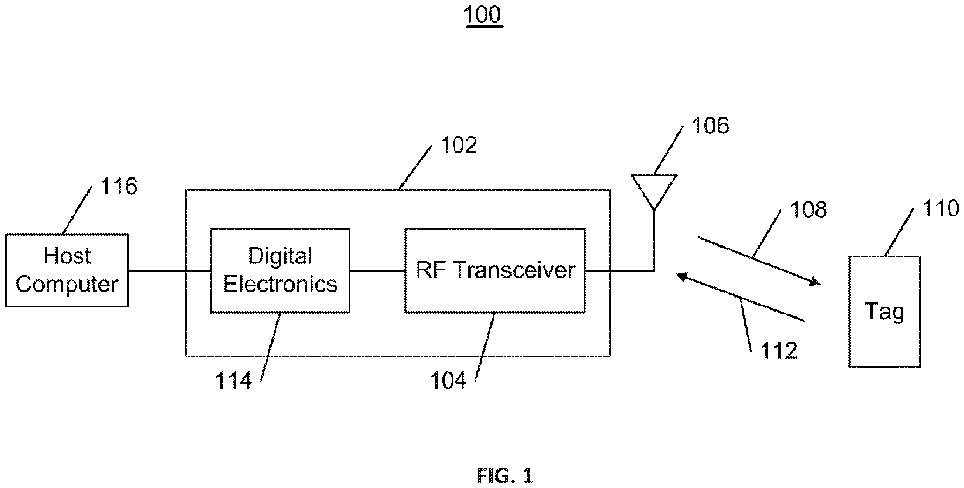

FIG. 1 shows a diagram illustrating an exemplary RFID system 100 in accordance with one embodiment described herein. In system 100, RFID interrogator 102 communicates with one or more RFID tags 110. Data can be exchanged between interrogator 102 and RFID tag 110 via radio transmit signal 108 and radio receive signal 112. RFID interrogator 102 comprises RF transceiver 104, which contains transmitter and receiver electronics, and antenna 106, which are configured to generate and receive radio transit signal 108 and radio receive signal 112, respectively. Exchange of data can be accomplished via electromagnetic or electrostatic coupling in the RF spectrum in combination with various modulation and encoding schemes.

RFID tag 110 is a transponder that can be attached to an object of interest and act as an information storage mechanism. In many applications, the use of passive RFID tags is desirable, because they have a virtually unlimited operational lifetime and can be smaller, lighter, and cheaper than active RFID tags that contain an internal power source, e.g. battery. Passive RFID tags power themselves by rectifying the RF signal emitted by the RF scanner. Consequently, the range of transmit signal 108 determines the operational range of RFID tag 110.

RF transceiver 104 transmits RF signals to RFID tag 110, and receives RF signals from RFID tag 110, via antenna 106. The data in transmit signal 108 and receive signal 112 can be contained in one or more bits for the purpose of providing identification and other information relevant to the particular RFID tag application. When RFID tag 110 passes within the range of the radio frequency magnetic field emitted by antenna 106, RFID tag 110 is excited and transmits data back to RF interrogator 102. A change in the impedance of RFID tag 110 can be used to signal the data to RF interrogator 102 via receive signal 112. The impedance change in RFID tag 110 can be caused by producing a short circuit across the tag's antenna connections (not shown) in bursts of very short duration. RF transceiver 104 senses the impedance change as a change in the level of reflected or backscattered energy arriving at antenna 106.

Digital electronics 114, which can comprise a microprocessor with RAM, performs decoding and reading of receive signal 112. Similarly, digital electronics 114 performs the coding of transmit signal 108. Thus, RF interrogator 102 facilitates the reading or writing of data to RFID tags, e.g. RFID tag 110 that are within range of the RF field emitted by antenna 104. Together, RF transceiver 104 and digital electronics 114 comprise reader 118. Finally, digital electronics 114 and can be interfaced with an integral display and/or provide a parallel or serial communications interface to a host computer or industrial controller, e.g. host computer 116.

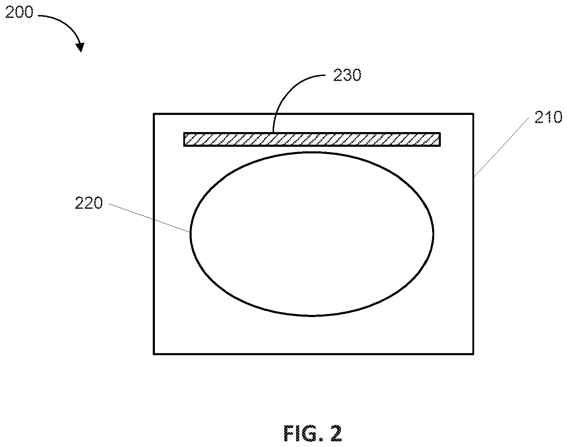

FIG. 2 shows a top-view illustration of an exemplary RFID switch tag 200 in an attached configuration in accordance with one embodiment described herein. In some embodiments, RFID switch tag 200 is used to implement RFID tag 110 in RFID system 100 shown in FIG. 1. As illustrated in FIG. 2, RFID switch tag 200 includes a base component 210 and a detachable component 220. In some embodiments, base component 210 includes an UHF booster 230, such as a booster antenna. Not that UHF booster 230 can include a passive booster, an active booster, or a battery-assisted passive booster. The detachable component 220 can include at least one UHF RFID module and an HF RFID module or tag. In particular embodiments, the at least one HF RFID module included in detachable component 220 is a near field communication (NFC) module. In some embodiments, the UHF RFID module and the HF RFID module share a common integrated circuit (IC) chip. In these embodiments, detachable component 220 essentially acts as a dual-frequency RFID tag.

The reference to a HF or UHF tag is intended to indicate that the HF or UHF module included in detachable component 220 comprise all the components necessary to perform the functions of a RFID tag, such as described with respect to tag 110 in FIG. 1. As noted, in certain embodiments, the modules can share components such as the IC, or portions of the IC and potentially the antenna. Although, sharing of the antenna or any components can depend on the frequency of operation, the required matching impendence, the protocols being used, etc.

Although the embodiment of FIG. 2 shows that detachable component 220 is positioned substantially in the middle of base component 210, other embodiments can have detachable component 220 placed in a non-centered position relative to base component 210. When placed near the base component 210, the UHF module can be configured such that it will inductively couple with the UHF booster antenna 230 in the base component 210.

In one exemplary embodiment, the at least one UHF RFID module included in detachable component 220 is coupled with UHF booster antenna 230 included in base component 210 to form an UHF RFID system of desire performances. For example, the desired performances include a desired operating range for the UHF RFID system. In one embodiment, an UHF coupling antenna within the at least one UHF RFID module in detachable component 220 is positioned in a manner to ensure a sufficient amount of coupling, such as an inductive coupling, a capacitive coupling, or both, between the UHF coupling antenna in detachable component 220 and UHF booster antenna 230 in base component 210. The at least one UHF RFID module and the HF RFID tag, such as an NFC tag included in the detachable component 220 can be active, passive, or battery-assisted passive without departing from the scope of the inventive concept of this disclosure.

Although detachable component 220 is shown to have an oval shape, other embodiments of detachable component 220 can have other shapes, such as a circular shape, a rectangular shape, a triangular shape without departing from the scope of the inventive concept of this disclosure. Furthermore, if detachable component 220 has a rectangular shape, the rectangular shape can have either right-angled corners or rounded-corners. When detachable component 220 has a rectangular shape and rounded-corners, detachable component 220 may have an appearance of a card.

In RFID switch tag 200 shown in FIG. 2, detachable component 220 may be attached to base component 210 in a number of ways. For example, detachable component 220 can be placed inside a pocket attached to base component 210. In some embodiments, detachable component 220 can be placed inside a cutout within base component 210 having a shape of detachable component 220 but configured with a slightly smaller profile to allow detachable component 220 to be securely held inside the cutout, [coupling]

According to one exemplary embodiment, RFID switch tag 200 can serve as a windshield tag. In this embodiment, base component 210 of RFID switch tag 200 can be attached to a vehicle's windshield using, for example, adhesives (e.g., adhesive strips). When RFID switch tag 200 is used as a windshield tag, RFID switch tag 200 can be used in various electronic toll collection (ETC) applications. For example, when RFID switch tag 200 is placed on a windshield with both base component 210 and detachable component 220, the at least one UHF module in detachable component 220 is coupled with UHF booster antenna 230 in base component 210 to form an UHF system having desired performances, such as a long operating range; however, when detachable component 220 is separated from base component 210 and the windshield, base component 210 can remain on the windshield but the at least one UHF module in detachable component 220 is no longer coupled to UHF booster antenna 230 in base component 210 As a result, neither the at least one UHF module in detachable component 220 nor UHF booster antenna 230 in base component 210 can be able to achieve the intended functionality of an UHF system, i.e., the UHF module is disabled.

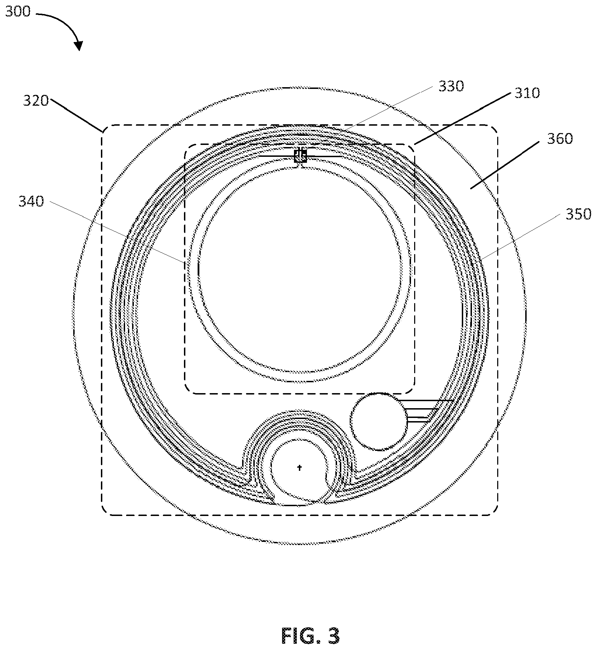

FIG. 3 shows a top-view illustration of an exemplary detachable component 220 in the form of a dual-frequency RFID module 300 in accordance with some embodiments described herein. As illustrated in FIG. 3, multi-frequency RFID module 300 includes an UHF module 310 and an NFC tag 320. More specifically, UHF module 310 further includes an integrated circuit (IC) chip 330 (or "chip 330" hereinafter) and an UHF loop 340, while NFC tag 320 further includes chip 330 and an HF antenna 350. Hence, in the embodiment shown, UHF module 310 and NFC tag 320 share chip 330. Chip 330 can include a memory (not shown) and other circuits. Dual-frequency RFID module 300 can also include a substrate 360 that provides structural supports for UHF module 310 and NFC tag 320. In various embodiments, chip 330, UHF loop 340 and HF antenna 350 can be deposited or fabricated on substrate 360.

In the embodiment of multi-frequency RFID module 300 illustrated in FIG. 3, UHF loop 340 is positioned substantially inside the loops of HF antenna 350. In some embodiments, HF antenna 350 is tuned to operate at a desired high frequency, such as 13.56 MHz. UHF loop 340 can also be tuned to operate at a desired ultra high frequency, such as 915 MHz or 2.45 GHz. In some embodiments, UHF loop 340 is used to couple chip 330 to UHF booster antenna 230 in base component 210 to form a functional UHF RFID tag. UHF loop 340 can be an UHF antenna by itself. Generally, UHF loop 340 can be implemented as any coupling means for coupling chip 330 to UHF booster antenna 230 in base component 210.

In the exemplary embodiment shown in FIG. 3, HF antenna 350 is configured as a loop antenna that includes multiple circular loops. However, in other embodiments, HF antenna 350 can be constructed with non-circular-shaped loops, such as rectangular loops without departing from the scope of the present inventive concept. Also in this embodiment, UHF loop 340 is shown to include two circular loops; however, in other embodiments, UHF loop 340 can include a single loop or more than two loops. While loops in UHF loop 340 is shown to be circular, UHF loop 340 can also be constructed with non-circular-shaped loops, such as rectangular loops without departing from the scope of the present inventive concept.

In some embodiments, chip 330 is configured to perform functions associated with both NFC and UHF systems including, but not limited to, encoding/decoding, modulation/demodulation, digital and analog processing, and data storage. Although multi-frequency RFID module 300 uses a single IC chip 330 for both the UHF RFID module and the NFC tag, other implementations of detachable component 220 can use separate IC chips for the UHF RFID module and the NFC tag.

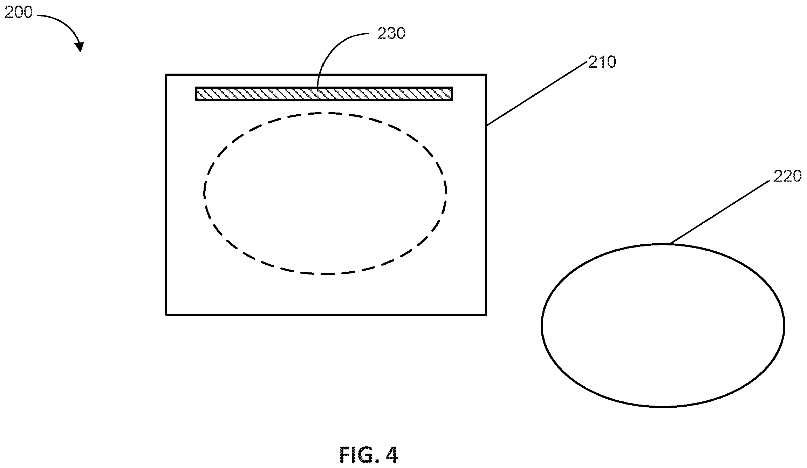

FIG. 4 shows a top-view illustration of RFID switch tag 200 in a detached configuration in accordance with one embodiment described herein. Referring to FIGs. 2 and 4, while FIG. 2 shows that detachable component 220 is attached to base component 210, FIG. 4 shows that detachable component 220 can be separated and detached from base component 210. Notably, detaching detachable component 220 from base component 210 uncouples the at least one UHF RFID module in detachable component 220 from UHF booster antenna 230 in base component 210. As such, when detachable component 220 is detached from base component 210, the performances of the at least one UHF RFID module may be significantly affected. For example, detaching detachable component 220 from base component 210 can render the at least one UHF RFID module nonfunctional.

Notably, the HF RFID tag such as an NFC tag within detachable component 220 can remain functional when detachable component 220 is separated from base component 210. As such, detached detachable component 220 can be used exclusively as an HF RFID tag, such as an NFC tag (e.g., for making contactless payments). When used as an NFC tag, detachable component 220 can be configured with a shape and dimensions (including width, height, and thickness) so that it is sufficiently durable and can be conveniently placed inside a wallet, a purse, or a protective cover of a portable electronic device, such as a smartphone, a tablet, or an iPad^{™}. The dimensions of detachable component 220 can be significantly greater than a typical RFID tag. In some embodiments, a rectangular shape having a size and a thickness that resembles a credit card is preferred. When detached from base component 210, detachable component 220 can be use in a "tap and go" manner in various NFC applications without being taken out of a wallet, a purse, or a protective cover of a portable electronic device where detachable component 220 is stored and carried around. In various embodiments, detachable component 220 is configured as a laminated card so that it is sufficiently durable through extensive uses as a standalone card. In some embodiments, detachable component 220 is configured with a hard case to provide additional durability and protection.

In some embodiments, RFID switch tag 200 is used in various ETC applications. For example, the at least one UHF RFID module in RFID switch tag 200 can be configured to be used in high occupancy vehicle (HOV) lanes, while the HF RFID tag in RFID switch tag 200 can be configured to be used in single occupancy vehicle (SOV) lanes. Hence, by switching detaching detachable component 220 between the detached configuration of RFID switch tag 200 and the attached configuration of RFID switch tag 200, RFID switch tag 200 permits a driver to switch between HOV operations and SOV operations using a single RFID switch tag 200. In such embodiments, the tag 200 can include a switching mechanism that allows the user to switch between the UHF and HF tags as required. U.S. Patent Application No. 15/160,982, entitled "Multi-Frequency Radio Frequency Identification Tag," filed May 20, 2016, which in turn claims priority to U.S. provisional Patent Application No. 62/165,167, also entitled "Multi-Frequency Radio Frequency Identification Tag," filed May 21, 2015; U.S. Patent Application No. 14/818,257, entitled "Methods and Apparatus for Preserving Privacy in an RFID System," filed August 4, 2015, which in turn claims priority to U.S. Patent Application Nos. 14/229,786, now U.S. Patent No. 9,098,790,entitled "Methods and Apparatus for Preserving Privacy in an RFID System," filed March 28, 2014, which in turn claims priority to U.S. Patent Application Nos. 13/736,819, now U.S. Patent No. 8,710,960, entitled "Methods and Apparatus for Preserving Privacy in an RFID System," filed January 8, 2013, which in turn claims priority to U.S. Patent Application Nos. 12/364,158, now U.S. Patent No. 8,350,673, entitled "Methods and Apparatus for Preserving Privacy in an RFID System," filed February 2, 2009, which in turn claims priority to U.S. provisional Patent Application No. 61/025,000, also entitled "Method and Apparatus for Preserving Privacy in RFID Systems," filed January 31, 2008; U.S. Patent Application No. 14/480,458, entitled "RFID Switch Tag," filed September 8, 2014, which in turn claims priority to U.S. Patent Application Nos. 13/465,829, now U.S. Patent No. 8,844,831,entitled "RFID Switch Tag," filed May 7, 2012, which in turn claims priority to U.S. provisional Patent Application Nos. 61/487,372, filed May 18, 2011 and 61/483,586, filed May 6, 2011, both entitled "RFID Switch Tag;" U.S. Patent Application No. 14/578,196, entitled "RFID Switch Tag," filed December 19, 2014, which in turn claims priority to U.S. Patent Application No. 14/060,407, now U.S. Patent No. 8,944,337, entitled "RFID Switch Tag," filed October 22, 2013, which in turn claims priority to U.S. Patent Application Nos. 13/465,834, now U.S. Patent No. 8,561,911,entitled "RFID Switch Tag," filed May 7, 2012, which in turn claims priority to U.S. provisional Patent Application Nos. 61/487,372, filed May 18, 2011 and 61/483,586, filed May 6, 2011, both entitled "RFID Switch Tag," disclose various embodiments of tags that allow switching between modules incorporated within a switchable and/or multi-frequency tag. Any of these mechanisms can be used in accordance with switch tag 200.

According to one exemplary embodiment, RFID switch tag 200 can be used in one or more account management applications. For example, RFID switch tag 200 can be used to track a vehicle for purposes of electronic tolling, parking access, and border control. At least some applications for the RFID switch tag 200 are described in U.S. Patent Nos. 8,844,831 and 8,944,337, and U.S. Patent Application Nos. 14/480,458 and 14/578,196.

In some embodiments, access to the memory on the at least one UHF module and the NFC tag included in the detachable component 220 can be granted based on a security key. The provision of secure identification solutions is described in U.S.

Patent No. 7,081,819, U.S. Patent No. 7,671,746, U.S. Patent No. 8,237,568, U.S. Patent No. 8,322,044, and U.S. Patent No. 8,004,410.

Multi-frequency RFID tags such as the RFID switch tag 200 are also described in Reissued U.S. Patent Nos. RE 43,355 and RE 44,691.

Parent application 15/160,982, discloses a module that is similar to 300 that can itself me interfaced with an booster antenna and removed therefrom in order to interface with an booster antenna in another substrate, such as in a card. Here, the module 220 can be included in a card or other substrate as described, which itself can be interface with the booster antenna 230. This allows the inclusion of a switching mechanism as described above, which can allow the user to switch between, e.g., the HF and UHF modules in order to enable various functionality or applications. The switching can occur when the module 220 is interface with substrate 210, or when it is removed therefrom. Again U.S. Patent Application No. 15/160,982, entitled "Multi-Frequency Radio Frequency Identification Tag," filed May 20, 2016, which in turn claims priority to U.S. provisional Patent Application No. 62/165,167, also entitled "Multi-Frequency Radio Frequency Identification Tag," filed May 21, 2015; U.S. Patent Application No. 14/818,257, entitled "Methods and Apparatus for Preserving Privacy in an RFID System," filed August 4, 2015, which in turn claims priority to U.S. Patent Application Nos. 14/229,786, now U.S. Patent No. 9,098,790,entitled "Methods and Apparatus for Preserving Privacy in an RFID System," filed March 28, 2014, which in turn claims priority to U.S. Patent Application Nos. 13/736,819, now U.S. Patent No. 8,710,960, entitled "Methods and Apparatus for Preserving Privacy in an RFID System," filed January 8, 2013, which in turn claims priority to U.S. Patent Application Nos. 12/364,158, now U.S. Patent No. 8,350,673, entitled "Methods and Apparatus for Preserving Privacy in an RFID System," filed February 2, 2009, which in turn claims priority to U.S. provisional Patent Application No. 61/025,000, also entitled "Method and Apparatus for Preserving Privacy in RFID Systems," filed January 31, 2008; U.S. Patent Application No. 14/480,458, entitled "RFID Switch Tag," filed September 8, 2014, which in turn claims priority to U.S. Patent Application Nos. 13/465,829, now U.S. Patent No. 8,844,83 1,entitled "RFID Switch Tag," filed May 7, 2012, which in turn claims priority to U.S. provisional Patent Application Nos. 61/487,372, filed May 18, 2011 and 61/483,586, filed May 6, 2011, both entitled "RFID Switch Tag;" U.S. Patent Application No. 14/578,196, entitled "RFID Switch Tag," filed December 19, 2014, which in turn claims priority to U.S. Patent Application No. 14/060,407, now U.S. Patent No. 8,944,337, entitled "RFID Switch Tag," filed October 22, 2013, which in turn claims priority to U.S. Patent Application Nos. 13/465,834, now U.S. Patent No. 8,561,911,entitled "RFID Switch Tag," filed May 7, 2012, which in turn claims priority to U.S. provisional Patent Application Nos. 61/487,372, filed May 18, 2011 and 61/483,586, filed May 6, 2011, both entitled "RFID Switch Tag," disclose various switching mechanism and methods for switching a module such as module 220.

Some applications can require a placement of metallic material (e.g., retroreflective material, holographic image) over the RFID switch tag 200. In order to preserve the transmission and reception capabilities of the RFID switch tag 200, a selective demetallization process may be employed to treat the metallic material. Selective demetallization is described in U.S. Patent No. 7,034,688 and 7,463,154.

The accompanying claims and their equivalents are intended to cover such forms or modifications as would fall within the scope of the protection. For example, the example apparatuses, methods, and systems disclosed herein can be applied wireless communication devices incorporating HF and/or UHF RFID reader capabilities. The various components illustrated in the figures may be implemented as, for example, but not limited to, software and/or firmware on a processor, ASIC/FPGA/DSP, or dedicated hardware. Also, the features and attributes of the specific example embodiments disclosed above may be combined in different ways to form additional embodiments, all of which fall within the scope of the present disclosure.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein can be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of receiver devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described can be implemented in hardware, software, firmware, or any combination thereof. If implemented in software, the functions may be stored as one or more instructions or code on a non-transitory computer-readable storage medium or non-transitory processor-readable storage medium. The steps of a method or algorithm disclosed herein may be embodied in processor-executable instructions that may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

Although the present disclosure provides certain example embodiments and applications, other embodiments that are apparent to those of ordinary skill in the art, including embodiments which do not provide all of the features and advantages set forth herein, are also within the scope of this disclosure. Accordingly, the scope of the present disclosure is intended to be defined only by the appended claims.

## Claims

1. A radio frequency identification switch tag (200), **characterized in that** the radio frequency identification switch tag comprises:
a base component (210) including an ultra-high frequency booster (230); and
a detachable component (220; 300), the detachable component (220; 300) including:
at least one ultra-high frequency radio frequency identification module (310) configured to couple with the ultra-high frequency booster (230),
a high frequency radio frequency identification module, and
a switching mechanism configured to switch between the at least one ultra-high frequency module (310) and the high frequency module.

2. The radio frequency identification switch tag (200) of claim 1, wherein the detachable component (220; 300) is positioned in close proximity to the base component (210) in a first configuration of the radio frequency identification switch tag (200) such that the at least one ultra-high frequency radio frequency identification module (310) is coupled to the ultra-high frequency booster (230) in the base component (210) to form an ultra-high frequency radio frequency identification system having a first performance.

3. The radio frequency identification switch tag (200) of claim 2, wherein the at least one ultra-high frequency radio frequency identification module (310) further includes an ultra-high frequency coupling antenna (340), and the at least one ultra-high frequency radio frequency identification module (310) is coupled to the base component (210) through inductive coupling between the ultra-high frequency coupling antenna (340) and the ultra-high frequency booster (230).

4. The radio frequency identification switch tag (200) of claim 2, wherein the detachable component (220; 300) is positioned substantially in the middle of the base component (210) in the first configuration.

5. The radio frequency identification switch tag (200) of claim 2, wherein the first performance is a first operating range of the ultra-high frequency radio frequency identification system.

6. The radio frequency identification switch tag (200) of claim 1, wherein the radio frequency identification switch tag (200) is configured to be placed on a vehicle's windshield to serve as a radio frequency identification tag in an electronic toll collection application.

7. The radio frequency identification switch tag (200) of claim 1, wherein the detachable component (220; 300) is configured to separate from the base component (210);
wherein, in a second configuration of the radio frequency identification switch tag (200), the detachable component (220; 300) is separated from the base component (210); and
wherein the detachable component (220; 300) is configured as a standalone high frequency radio frequency identification tag when the radio frequency identification switch tag (200) is in the second configuration.

8. The radio frequency identification switch tag (200) of claim 1 or of claim 7, wherein the high frequency radio frequency identification tag is configured as a near-field communication tag (320).

9. The radio frequency identification switch tag (200) of claim 7, wherein the at least one ultra-high frequency radio frequency identification module (310) is configured to decouple from the ultra-high frequency booster (230) in the base component (210) when the radio frequency identification switch tag is in the second configuration; and
wherein the at least one ultra-high frequency radio frequency identification module (310) is disabled when the radio frequency identification switch tag is in the second configuration.

10. A method of using a radio frequency identification switch tag (200), wherein the radio frequency identification switch tag (200) includes a base component (210) including an ultra-high frequency booster (230) and a detachable component (220; 300) including at least one ultra-high frequency radio frequency identification module (310), a high frequency radio frequency identification module, and a switching mechanism, the method comprising:
positioning the detachable component (220; 300) in close proximity to the base component (210) in a first configuration of the radio frequency identification switch tag (200) such that the at least one ultra-high frequency radio frequency identification module (310) in the detachable component (220; 300) is inductively coupled to the ultra-high frequency booster (230) in the base component (210) to form an ultra-high frequency radio frequency identification tag having a first operating range longer than an operating range of the at least one ultra-high frequency radio frequency identification module (310);
using the ultra-high frequency radio frequency identification tag in a first radio frequency identification application that requires the first operating range;
using the switching mechanism to switch from the ultra-high frequency radio frequency identification module (310) to the high frequency radio frequency identification module; and
using the high frequency radio frequency identification module in a second radio frequency identification application, while the detachable component (220; 300) is in close proximity with the base component (210).

11. The method of claim 10, wherein positioning the detachable component (220; 300) includes positioning the detachable component (220; 300) substantially in the middle of the base component (210).

12. The method of claim 10, wherein the method further comprises:
detaching the detachable component (220; 300) from the base component (210) to obtain a third configuration of the radio frequency identification switch tag (200); and
using the high frequency radio frequency identification module, in the third configuration, as a near-field communication tag in a third radio frequency identification application which requires a near-field communication operating range.

13. The method of claim 12, further comprising placing the radio frequency identification switch tag (200) on a vehicle's windshield to serve as a radio frequency identification tag in an electronic toll collection application; or
the method of claim 12, wherein the first radio frequency identification application is a first electronic toll collection application for high occupancy vehicle lanes and wherein the second radio frequency identification application is a second electronic toll collection application for single occupancy vehicle lanes.

## Patentansprüche

1. Funkfrequenzidentifizierungsschalteretikett (200), **dadurch gekennzeichnet, dass** das Funkfrequenzidentifizierungsschalteretikett umfasst:
eine Basiskomponente (210), die einen Ultrahochfrequenzverstärker (230) umfasst; und
eine entfernbare Komponente (220; 300), wobei die entfernbare Komponente (220; 300) umfasst:
mindestens ein Ultrahochfrequenz-Funkfrequenzidentifizierungsmodul (310), das zum Koppeln mit dem Ultrahochfrequenzverstärker (230) konfiguriert ist,
ein Hochfrequenz-Funkfrequenzidentifizierungsmodul, und
einen Schaltmechanismus, der zum Umschalten zwischen dem mindestens einen Ultrahochfrequenzmodul (310) und dem Hochfrequenzmodul konfiguriert ist.

2. Funkfrequenzidentifizierungsschalteretikett (200) nach Anspruch 1, wobei die entfernbare Komponente (220; 300) in einer ersten Konfiguration des Funkfrequenzidentifizierungsschalteretiketts (200) in unmittelbarer Nähe der Basiskomponente (210) derart positioniert ist, dass das mindestens eine Ultrahochfrequenz-Funkfrequenzidentifizierungsmodul (310) mit dem Ultrahochfrequenzverstärker (230) in der Basiskomponente (210) gekoppelt ist, um ein Ultrahochfrequenz-Funkfrequenzidentifizierungssystem mit einer ersten Leistung zu bilden.

3. Funkfrequenzidentifizierungsschalteretikett (200) nach Anspruch 2, wobei das mindestens eine Ultrahochfrequenz-Funkfrequenzidentifizierungsmodul (310) ferner eine Ultrahochfrequenz-Koppelantenne (340) umfasst und das mindestens eine Ultrahochfrequenz-Funkfrequenzidentifizierungsmodul (310) durch induktive Kopplung zwischen der Ultrahochfrequenz-Koppelantenne (340) und dem Ultrahochfrequenzverstärker (230) mit der Basiskomponente (210) gekoppelt ist.

4. Funkfrequenzidentifizierungsschalteretikett (200) nach Anspruch 2, wobei die entfernbare Komponente (220; 300) in der ersten Konfiguration im Wesentlichen in der Mitte der Basiskomponente (210) angeordnet ist.

5. Funkfrequenzidentifizierungsschalteretikett (200) nach Anspruch 2, wobei die erste Leistung ein erster Betriebsbereich des Ultrahochfrequenz-Funkfrequenzidentifizierungssystems ist.

6. Funkfrequenzidentifizierungsschalteretikett (200) nach Anspruch 1, wobei das Funkfrequenzidentifizierungsschalteretikett (200) dazu konfiguriert ist, an einer Fahrzeug-Windschutzscheibe angebracht werden kann, um als ein Funkfrequenzidentifizierungsetikett in einer elektronischen Mauterhebungsanwendung zu dienen.

7. Funkfrequenzidentifizierungsschalteretikett (200) nach Anspruch 1, wobei die entfernbare Komponente (220; 300) dazu konfiguriert ist, von der Basiskomponente (210) getrennt zu werden;
wobei in einer zweiten Konfiguration des Funkfrequenzidentifizierungsschalteretiketts (200) die entfernbare Komponente (220; 300) von der Basiskomponente (210) getrennt ist; und
wobei die entfernbare Komponente (220; 300) als ein eigenständiges Hochfrequenz-Funkfrequenzidentifizierungsetikett konfiguriert ist, wenn sich das Funkfrequenzidentifizierungsschalteretikett (200) in der zweiten Konfiguration befindet.

8. Funkfrequenzidentifizierungsschalteretikett (200) nach Anspruch 1 oder 7, wobei das Hochfrequenz-Funkfrequenzidentifizierungsetikett als ein Nahfeld-Kommunikationsetikett (320) konfiguriert ist.

9. Funkfrequenzidentifizierungsschalteretikett (200) nach Anspruch 7, wobei das mindestens eine Ultrahochfrequenz-Funkfrequenzidentifizierungsmodul (310) dazu konfiguriert ist, sich von dem Ultrahochfrequenzverstärker (230) in der Basiskomponente (210) abzukoppeln, wenn sich das Funkfrequenzidentifizierungsschalteretikett in der zweiten Konfiguration befindet; und
wobei das mindestens eine Ultrahochfrequenz-Funkfrequenzidentifizierungsmodul (310) deaktiviert ist, wenn sich das Funkfrequenzidentifizierungsschalteretikett in der zweiten Konfiguration befindet.

10. Verfahren zur Verwendung eines Funkfrequenzidentifizierungsschalteretiketts (200), wobei das Funkfrequenzidentifizierungsschalteretikett (200) eine Basiskomponente (210) mit einem Ultrahochfrequenzverstärker (230) und eine entfernbare Komponente (220; 300) mit mindestens einem Ultrahochfrequenz-Funkfrequenzidentifizierungsmodul (310), einem Hochfrequenz-Funkfrequenzidentifizierungsmodul und einen Schaltmechanismus umfasst, wobei das Verfahren umfasst:
Positionieren der entfernbaren Komponente (220; 300) in unmittelbarer Nähe der Basiskomponente (210) in einer ersten Konfiguration des Funkfrequenzidentifizierungsschalteretiketts (200) derart, dass das mindestens eine Ultrahochfrequenz-Funkfrequenzidentifizierungsmodul (310) in der entfernbaren Komponente (220; 300) induktiv mit dem Ultrahochfrequenzverstärker (230) in der Basiskomponente (210) gekoppelt wird, um ein Ultrahochfrequenz-Funkfrequenzidentifizierungsetikett zu bilden, das einen ersten Betriebsbereich aufweist, der größer ist als ein Betriebsbereich des mindestens einen Ultrahochfrequenz-Funkfrequenzidentifizierungsmoduls (310);
Verwenden des Ultrahochfrequenz-Funkfrequenzidentifizierungsetiketts in einer ersten Funkfrequenzidentifizierungsanwendung, die den ersten Betriebsbereich erfordert;
Verwenden des Schaltmechanismus, um von dem Ultrahochfrequenz-Funkfrequenzidentifizierungsmodul (310) auf das Hochfrequenz-Funkfrequenzidentifizierungsmodul umzuschalten; und
Verwenden des Hochfrequenz-Funkfrequenzidentifizierungsmoduls in einer zweiten Funkfrequenzidentifizierungsanwendung, während sich die entfernbare Komponente (220; 300) in unmittelbarer Nähe der Basiskomponente (210) befindet.

11. Verfahren nach Anspruch 10, wobei das Positionieren der entfernbaren Komponente (220; 300) das Positionieren der entfernbaren Komponente (220; 300) im Wesentlichen in der Mitte der Basiskomponente (210) umfasst.

12. Verfahren nach Anspruch 10, wobei das Verfahren ferner umfasst:
Entfernen der entfernbaren Komponente (220; 300) von der Basiskomponente (210), um eine dritte Konfiguration des Funkfrequenzidentifizierungsschalteretiketts (200) zu erhalten; und
Verwenden des Hochfrequenz-Funkfrequenzidentifizierungsmoduls in der dritten Konfiguration als ein Nahfeld-Kommunikationsetikett in einer dritten Funkfrequenzidentifizierungsanwendung, die einen Nahfeld-Kommunikationsbetriebsbereich erfordert.

13. Verfahren nach Anspruch 12, ferner umfassend das Anbringen des Funkfrequenzidentifizierungsschalteretiketts (200) an einer Fahrzeug-Windschutzscheibe, um als ein Funkfrequenzidentifizierungsetikett in einer elektronischen Mauterhebungsanwendung zu dienen; oder
Verfahren nach Anspruch 12, wobei die erste Funkfrequenzidentifizierungsanwendung eine erste elektronische Mauterhebungsanwendung für Fahrgemeinschaftsspuren ist, und wobei die zweite Funkfrequenzidentifizierungsanwendung eine zweite elektronische Mauterhebungsanwendung für Fahrspuren für einen einzelnen Fahrer ist.

## Revendications

1. Etiquette à commutation d'identification par radiofréquence (200), **caractérisée en ce que** l'étiquette à commutation d'identification par radiofréquence comprend :
un composant de base (210) comprenant un amplificateur ultra-haute fréquence (230) ; et
un composant détachable (220 ; 300), le composant détachable (220 ; 300) comprenant :
au moins un module d'identification par radiofréquence ultra-haute fréquence (310) configuré pour se coupler à l'amplificateur ultra-haute fréquence (230),
un module d'identification par radiofréquence haute fréquence, et
un mécanisme de commutation configuré pour commuter entre l'au moins un module ultra-haute fréquence (310) et le module haute fréquence.

2. Etiquette à commutation d'identification par radiofréquence (200) selon la revendication 1, dans laquelle le composant détachable (220 ; 300) est positionné à proximité immédiate du composant de base (210) dans une première configuration de l'étiquette à commutation d'identification par radiofréquence (200) de telle sorte que l'au moins un module d'identification par radiofréquence ultra-haute fréquence (310) est couplé à l'amplificateur ultra-haute fréquence (230) dans le composant de base (210) pour former un système d'identification par radiofréquence ultra-haute fréquence ayant une première performance.

3. Etiquette à commutation d'identification par radiofréquence (200) selon la revendication 2, dans laquelle l'au moins un module d'identification par radiofréquence ultra-haute fréquence (310) comprend en outre une antenne de couplage ultra-haute fréquence (340), et l'au moins un module d'identification par radiofréquence ultra-haute fréquence (310) est couplé au composant de base (210) par couplage inductif entre l'antenne de couplage ultra-haute fréquence (340) et l'amplificateur ultra-haute fréquence (230).

4. Etiquette à commutation d'identification par radiofréquence (200) selon la revendication 2, dans laquelle le composant détachable (220; 300) est positionné sensiblement au milieu du composant de base (210) dans la première configuration.

5. Etiquette à commutation d'identification par radiofréquence (200) selon la revendication 2, dans laquelle la première performance est une première plage de fonctionnement du système d'identification par radiofréquence ultra-haute fréquence.

6. Etiquette à commutation d'identification par radiofréquence (200) selon la revendication 1, dans laquelle l'étiquette à commutation d'identification par radiofréquence (200) est configurée pour être placée sur le pare-brise d'un véhicule pour servir d'étiquette d'identification par radiofréquence dans une application de télépéage.

7. Etiquette à commutation d'identification par radiofréquence (200) selon la revendication 1, dans laquelle le composant détachable (220; 300) est configuré pour se séparer du composant de base (210) ;
dans laquelle, dans une deuxième configuration de l'étiquette à commutation d'identification par radiofréquence (200), le composant détachable (220 ; 300) est séparé du composant de base (210) ; et
dans laquelle le composant détachable (220 ; 300) est configuré comme une étiquette d'identification par radiofréquence haute fréquence autonome lorsque l'étiquette à commutation d'identification par radiofréquence (200) est dans la deuxième configuration.

8. Etiquette à commutation d'identification par radiofréquence (200) selon la revendication 1 ou selon la revendication 7, dans laquelle l'étiquette d'identification par radiofréquence haute fréquence est configurée comme une étiquette de communication en champ proche (320).

9. Étiquette à commutation d'identification par radiofréquence (200) selon la revendication 7, dans laquelle l'au moins un module d'identification par radiofréquence ultra-haute fréquence (310) est configuré pour se découpler de l'amplificateur ultra-haute fréquence (230) dans le composant de base (210) lorsque l'étiquette à commutation d'identification par radiofréquence est dans la deuxième configuration ; et
dans laquelle l'au moins un module d'identification par radiofréquence ultra-haute fréquence (310) est désactivé lorsque l'étiquette à commutation d'identification par radiofréquence est dans la deuxième configuration.

10. Procédé d'utilisation d'une étiquette à commutation d'identification par radiofréquence (200), dans lequel l'étiquette à commutation d'identification par radiofréquence (200) comprend un composant de base (210) comprenant un amplificateur ultra-haute fréquence (230) et un composant détachable (220 ; 300) comprenant au moins un module d'identification par radiofréquence ultra-haute fréquence (310), un module d'identification par radiofréquence haute fréquence et un mécanisme de commutation, le procédé comprenant :
positionner le composant détachable (220 ; 300) à proximité immédiate du composant de base (210) dans une première configuration de l'étiquette à commutation d'identification par radiofréquence (200) de telle sorte que l'au moins un module d'identification par radiofréquence ultra-haute fréquence (310) dans le composant détachable (220 ; 300) est couplé par induction à l'amplificateur ultra-haute fréquence (230) dans le composant de base (210) pour former une étiquette d'identification par radiofréquence ultra-haute fréquence ayant une première plage de fonctionnement plus longue qu'une plage de fonctionnement de l'au moins un module d'identification par radiofréquence ultra-haute fréquence (310) ;
utiliser l'étiquette d'identification par radiofréquence ultra-haute fréquence dans une première application d'identification par radiofréquence qui nécessite la première plage de fonctionnement ;
utiliser le mécanisme de commutation pour commuter du module d'identification par radiofréquence ultra-haute fréquence (310) au module d'identification par radiofréquence haute fréquence ; et
utiliser le module d'identification par radiofréquence haute fréquence dans une deuxième application d'identification par radiofréquence, tandis que le composant détachable (220 ; 300) est à proximité immédiate du composant de base (210).

11. Procédé selon la revendication 10, dans lequel le positionnement du composant détachable (220 ; 300) comprend le positionnement du composant détachable (220 ; 300) sensiblement au milieu du composant de base (210).

12. Procédé la revendication 10, dans lequel le procédé comprend en outre :
détacher le composant détachable (220 ; 300) du composant de base (210) pour obtenir une troisième configuration de l'étiquette à commutation d'identification par radiofréquence (200) ; et
utiliser le module d'identification par radiofréquence haute fréquence, dans la troisième configuration, en tant qu'étiquette de communication en champ proche dans une troisième application d'identification par radiofréquence qui nécessite une plage de fonctionnement de communication en champ proche.

13. Procédé selon la revendication 12, comprenant en outre le placement de l'étiquette à commutation d'identification par radiofréquence (200) sur le pare-brise d'un véhicule pour servir d'étiquette d'identification par radiofréquence dans une application de télépéage ; ou
procédé selon la revendication 12, dans lequel la première application d'identification par radiofréquence est une première application de télépéage pour des voies de véhicules à occupation élevée et dans lequel la deuxième application d'identification par radiofréquence est une deuxième application de télépéage pour des voies de véhicules à occupation unique.
